# EUROPEAN PATENT APPLICATION

(11) **EP 4 011 215 A1**
(43) Date of publication of application: **15.06.2022**
(21) Application number: 20212881.5
(22) Date of filing: 09.12.2020
(51) Int. Cl.: A23L 5/10, A23L 11/30, A23L 19/00, A23L 33/105

(54) **METHOD AND SYSTEM FOR DEBITTERING CICHORIUM PRODUCTS**

(71) Applicant: S.T.A.F. VOF, 1840 Steenhuffel (BE)
(72) Inventor: VERTONGHEN, Christiane, B-1840 Steenhuffel (BE); VERSLUYS, Johan, B-9940 Evergem (BE)
(74) Representative: IPLodge bv

(57) **Abstract**

The present invention concerns a method for obtaining a vegetarian food product from portions of a plant of the genus Cichorium, comprising the step of blanching said portions by immersing said portions in water at a blanching temperature of between 40°C and 99°C, for a blanching period of at least 11 minutes, and subsequently reducing the moisture content of the blanched portions to less than 95 weight%, thereby obtaining a fibrous vegetarian food product suitable to be further processed into hybrid or vegetarian meat, fish or poultry products.

## Description

### Technical Field

The present invention relates to a method and system for processing products of the genus Cichorium, preferably Cichorium intybus, in particular to a method and system for reducing the bitterness of parts of the plant in order to make these components available for human consumption, more particularly for application as food ingredient in hybrid or vegetarian meat, fish and poultry products without a need for prior drying, texturization and subsequent rehydration steps of the new food ingredient.

### Background

The motivations of consumers who wish to avoid or reduce meat consumption become more and more complex: health reasons, ethical concerns about animal welfare, global food shortage, the intention to reduce one's ecological footprint, or a combination thereof. Also general trends in food consumption apply, such as an increased attention to short-chain economy with local products and reduction of food waste.

Many contemporary meat replacement products do no satisfy all of the above expectations. For instance, many raw materials used in the production of vegetarian products originate from crops grown on other continents, which may have adverse effects regarding the intention of the consumer, such as reduction of tropical rain forest or the necessity of complex extraction or refinery processes, which could be energy-intensive, e.g. because of transport, extraction, extrusion and (often multiple) drying processes.

Without use of food additives (E-numbers), many of the available meat alternatives cannot imitate the texture, solidity and processability of meat.

Many meat products are characterized by a loose, open and fibrous structure. This property is difficult for alternatives which start off from a powder-like substance. Consequently, the vegetarian meat alternatives based thereon tend to have a rubbery, compact gel structure.

Document WO 2017062512 A1 discloses a food product comprising at least 1.5%, 5%, 10%, 20%, 30%), or more, by weight total ingredients of a low bitter chicory plant material or flour. It also provides a method for obtaining a chicory product with reduced bitterness, comprising blanching chicory roots or root chips, drying the blanched chicory root chips, and optionally grinding the dried chicory root chips and incorporating it into flour, dough, or other food products. Also provided is a method for obtaining a chicory taproot with reduced bitterness, comprising cultivating a chicory plant at a soil nitrogen level of 150 lbs per acre or less in the upper 3 feet of the soil. In this method, a specially grown variety of chicory seems required to obtain low bitterness.

However, whereas prior art documents are mainly concerned with reducing the bitterness, in particular by the reducing the bitterness of the plant itself, while maintaining a high level of carbon hydrates, typically in the form of inulin, the present invention is concerned with the aim of obtaining a low bitterness, and even a no-bitterness, product having a meat-like texture, such that the product can be used as a meat, fish and/or poultry alternative in vegetarian products. This widens the scope of usage, since usually, the most bitter portions of the plants are not used for human consumption, but can at best be used for animal consumption.

The present invention provides a solution to the above problems and offers an alternative resource for making a vegetarian meat, fish and/or poultry alternative having a sufficient fibrous structure, on the basis of locally cultivable vegetarian resources, without requiring structure improving food additives, with minimal processing, without requiring growing a special variety of chicory. The texture should be firm, juicy and tender without chemical additives.

### Summary of the invention

The present invention relates to a method for obtaining a vegetarian food product from portions of a plant of the genus Cichorium, comprising the step of blanching said portions by immersing said portions in water at a blanching temperature of between 40°C and 99°C, for a blanching period of at least 11 minutes, preferably at least 1 hour, and preferably at most 4 hours. In a preferred embodiment, the moisture content of the blanched portions is subsequently reduced to between 40 and 95 weight%.

The present invention also relates to a food product for human consumption as obtained with the method of the present invention, and a system for obtaining a vegetarian food product from portions of a plant of the genus Cichorium, the system being configured to perform the method of the present invention. Thereto the system comprises a blanching system which comprises a basin for immersing said portions in water, said basin comprising a temperature regulating system, preferably the system further comprising a cooking system comprising a temperature-regulated chamber configured for vacuum cooking the blanched portions.

The plants of the genus Cichorium can preferably be any or any combination of the following: Cichorium alatum, Cichorium bottae, Cichorium callosum, Cichorium calvum, Cichorium dubium, Cichorium endivia, Cichorium hybridum, Cichorium intybus, Cichorium pumilum, Cichorium spinosum, more preferably any or any combination of Cichorium intybus and Cichorium endivia. Most preferably the plant of the genus Cichorium as used in the present invention, is a plant of the species Cichorium intybus, more preferably of the variety Cichorium intybus var. sativum and/or the variety Cichorium intybus var. foliosum.

An important cause for the bitterness of plants of the genus Cichorium, is the presence of sesquiterpene lactone compounds, in particular lactucin (Lc) and lactucopicrin (Lp) which are both sesquiterpene lactones with a guaiane skeleton. These compounds are mainly present in the roots. The method of the present invention is particularly apt in removing the bitter compounds of Cichorium plants, while keeping the fibrous structure of the plant portions intact without chemical modifications or processing at high pressure and/or high temperature.

The inventors have found that portions of Cichorium plants, and preferably of the Cichorium intybus plant, have the required texture when treated according to the present invention. As such, the treated portions can be used as a basis for different types of food products. More in particular, its properties with respect to biting and chewing are much alike meat, such that it can be used to partially or completely replace meat, fish and/or poultry in food products.

The portions processed according to present invention have a taste which has low or no bitterness, and have a structure that is very similar to meat, fish and/or poultry in terms of firmness, juiciness, tenderness and fiber structure, and this without chemical modifications or use of high-pressure/high-temperature extrusion processes. This makes the vegetable suitable as an alternative raw material in hybrid meat, fish and/or poultry preparations and prepared meat, fish and/or poultry. Hybrid here means a combination of meat, fish and/or poultry, and vegetable material within one and the same consumable product that is visually recognizable as the meat preparation or prepared meat with only meat as the basic raw material and which is further processed and consumed in the same way.

### Detailed description of the invention

As indicated, the present invention concerns a method and a system for obtaining a vegetarian food product from portions of a plant of the genus Cichorium, the vegetarian food product thus obtained, food product comprising such vegetarian food product.

In an embodiment, the portions of the plant comprise root portions and/or leaf portions. It is a particular advantage of the present invention that many different portions of the plant can be treated in the same method and with the same system to obtain a product of low bitterness or no bitterness at all.

In an embodiment, the portions of the plant are, prior to the step of blanching said portions, cleaned. Cleaning may preferably comprise removing of dirt, decayed parts and/or removing root hairs. Cleaning can preferably comprise rinsing and/or washing the portions, e.g. drum washing. Accordingly, the system of the present invention preferably comprises a drum wash apparatus.

In an embodiment, the method of the present invention comprises the step of, prior to blanching, reducing the size of a plant of the genus Cichorium, or of a plant part thereof, thereby obtaining said portions. Said reduction may preferably comprise any or any combination of the following: cutting, chipping, grinding, scraping, etc. Accordingly, the system of the present invention preferably comprises any or any combination of the following: a cutter, a chipper, a grinding mill, a scraper, etc.

In an embodiment, said step of blanching said portions comprises substantially immersing said portions in water at a blanching temperature of between 40°C and 99°C, preferably between 40°C and 90°C, for a blanching period of at least 11 minutes, and preferably less than 4 hours, more preferably between 1 hour and 4 hours, still more preferably between 1 hour and 2 hours.

In a preferred embodiment, during said blanching step, said portions are submersed in water at a weight ratio of at least 1:1, such as preferably between 1:1 and 1:7, more preferably at least 1:2, such as preferably between 1:2 and 1:6. The ratio's given refer to the weight ratio of portions with respect to water, e.g. the ratio 1:2 refers to portions being submersed in an amount of water corresponding to twice the weight of the portions. It is found that an excess of water is particularly advantageous to remove the bitter components from the plant portions, in particular in combination with the temperature between 40°C and 99°C and the blanching period of at least 11 minutes, preferably at least 1 hour.

Alternatively, or additionally, said portions are immersed in a water flow, preferably while said portions being pressed in opposite direction of the water flow, more preferably whereby said portions are immersed in water using a counterflow screw press. Hereby, the mixture of water and plant portions comprises a temperature between 40°C and 99°C and/or said portions are immersed hereby for a blanching period of at least 11 minutes, preferably at least 1 hour, and preferably less than 2 hours. Accordingly, the system of the present invention comprises a counterflow screw press for pressing said portions in a direction opposite of a waterflow. A preferred example of such a counterflow screw press is a continuous horizontal helix extractor. Such continuous horizontal helix extractor comprises a chamber for the mixture in which a screw is present, said screw capable for mechanically pressing the mixture into a direction opposite of a water flow. Hereby, the bitter compounds can be extracted.

Preferably, the portions are, after the blanching step, taken out from the water and/or the water is removed from the portions, preferably by leaking the portions and/or squeezing the portions.

In an embodiment of the present invention, portions of the Cichorium intybus (Chicory) plant of a white or colored variety, mainly consisting of parts of the roots, are washed by superficially rinsing. The rinsed portion are subsequently washed in a drumwash to remove root hairs. The cleaned portions are inspected to see if they are well cleaned and if any further portions, e.g. portions with decaying parts, need to be removed.

The plant portions preferably comprise a maximal size of at most 20mm, preferably at most 15mm, such as at most 14mm, 13mm, 12mm, 11mm. In a particularly preferred embodiment, the plant portions comprise a maximal size of at most 10 mm. In a preferred embodiment, the portions are block shaped with a sizes in between 1mm and 10mm. Alternatively, the portions are bar-shaped or ribbon-shaped portions having a thickness between 1mm and 10mm. The length of such bar-shaped or ribbon-shaped portions is preferably at most 10 times the thickness.

Accordingly, in a preferred embodiment of the method of the present invention, the portions are reduced in size to obtain smaller blocks of sizes in between 1mm and 10mm. Alternatively, the portions can be reduced to bar-shaped or ribbon-shaped portions having a thickness between 1mm and 10mm. The length of such bar-shaped or ribbon-shaped portions is preferably at most 10 times the thickness. Preferably the portions are reduced after being washed or rinsed, and before being blanched.

Optionally, the reduced portions are washed or rinsed, preferably with water, more preferably with water of a temperature between below 20°C.

During reduction of the portions, during the optional subsequent washing or rinsing of the reduced portions, and/or during the blanching of the portions, any or any combination of the following is applied to the portions:
- Citric acid in an aqueous solution at a concentration of lower than 1 wt.%, preferably between 0.1 and 0.25 wt.%
- Vinegar of 14° in an aqueous solution at a concentration of lower than 1 wt.%, preferably between 0 and 0.5 wt.%
- Salt, such as NaCl salt, in an aqueous solution at a concentration of lower than 1.5 wt.%, preferably between 0 and 0.5 wt.%
- Ascorbic acid, sodium ascorbate, iso-ascorbic acid or sodium erythorbate in an aqueous solution at a concentration of lower than 0.2 wt.%, preferably between 0.05 and 0.15 wt.%
- Sodium salts and/or potassium salts in an aqueous solution at a concentration of lower than 3 wt.%
- Sodium diacetate in an aqueous solution at a concentration of lower than 1 wt.%

If the vegetarian food product obtained by the method according to the present invention is intended to be used as an alternative for white meat, poultry or fish, preferably at least citric acid and/or ascorbic acid are applied, more preferably all the above substances are applied. If the vegetarian food product is intended to be used as a meat alternative for red meat such as pork or beef, preferably no salts are applied and/or no sodium diacetate is applied, and preferably all the other substances listed above are applied.

In an exemplary embodiment, the following combination is applied to the portions: an aqueous solution of: salt at a concentration of 0.1 wt.%, citric acid at a concentration of 0.15 wt.%, ascorbic acid at a concentration of 0.075% and vinegar of 14° at a concentration of 0.05 wt.%.

In an embodiment, during reduction of the portions, any or any combination of the following substances is added to the portions: lemon, lime, orange and/or other citrus fruits, preferably for an amount of at most 8 wt.% compared to the portions, such as preferably 0 wt., 2 wt.% or 4 wt.%.

The portions are then blanched, optionally with the added substances, by submersing the portions in water at a weight ratio of between 1:1 and 1:7, preferably between 1:2 and 1:6 for a blanching period of at least 11 minutes , more preferably at least 1 hour, and preferably at most 4 hours, at a temperature between 40 and 99°C. They can also be blanched using a counter screw press such as a continuous horizontal helix extractor, wherein the portions are pushed against a water counterflow, the mixture of water and plant portions being at a temperature of between 40°C and 99°C, at a weight ratio of between 1:1 and 1:7, preferably between 1:2 and 1:6, and this for a blanching period of at least 11 minutes, preferably at least 1 hour, and preferably at most 2 hours.

The portions are, after the blanching step, preferably taken out from the water and/or the water is removed from the portions, preferably by leaking the portions and/or squeezing the portions, preferably until the moisture content is between 40 and 95 wt%.Note that the present invention does not rely on an energy and time consuming drying step to remove essentially all the moisture content.

In a preferred embodiment, the moisture content is reduced by mechanical reduction, e.g. using a mechanical press.

The blanched portions, preferably after reducing, more preferably after mechanically reducing, the moisture content as described above, can be treated in a further step, by performing any or any combination of the following:
a. An amount of blanched portions, or of parts thereof, are wrapped, preferably vacuum wrapped, and are frozen, preferably to a temperature of -18°C or lower. This allows long-time storage, of up to 1.5 years or more.
b. An amount of blanched portions, or of parts thereof, individually frozen, e.g. individual quick frozen (IQF), preferably by separating the portions or parts thereof by shaking (e.g. using a vibrating belt or a mixer, and subsequently freezing them in e.g. freezing tunnel, preferably to a temperature of -18°C or lower. This also allows long-time storage, of up to 1.5 years or more.
c. An amount of blanched portions, or of parts thereof, are vacuum wrapped and pasteurized, e.g. in a heating chamber, at a temperature of between 80°C and 95°C, preferably to a core temperature of 67°C to 95°C. Subsequently they are preferably cooled and stored chilled. This allows long-time storage of at least 1 month and up to 6 months or even longer if they are stored at low temperature, e.g. at 4°C or less.
d. An amount of blanched portions, or of parts thereof, are cooled down, preferably to a temperature of 4°C or less, such as preferably between -5°C and 4°C. This allows storage for up to 1 week, which is typically sufficiently long to be further used fresh in food preparations.
e. An amount of blanched portions, or of parts thereof, are packaged in a retort stable package and sterilized in order to enable storage at ambient temperature.
f. An amount of blanched portions are vacuum wrapped and cooled down, preferably to a temperature of 4°C or less, such as preferably between -5°C and 4°C.

The present invention also concerns food products comprising the vegetarian food product obtained from portions of a plant of the genus Cichorium as obtained according to the present invention. This may include fully vegetarian food products or hybrid food products.

In an embodiment, the food product is a hybrid food product comprising at most 50 wt% of the vegetarian food product according to the present invention. Preferably the food product comprises at least 5wt%, more preferably at least 10 wt%, of the vegetarian food product of the present invention. The hybrid food product may comprise a non-vegetarian component, which can preferably be meat, animal fat, connective tissue, fish, or any combination thereof. In an embodiment, the hybrid food product comprises a weight ratio of the vegetarian food product to a non-vegetarian food component of at most 1:1, and preferably at least 1:5.

In an embodiment, the food product comprises the vegetarian food product according to the present invention for at least 40 wt%, and preferably up to at most 85 wt% of the solid mass of the food product, i.e. if the food product comprises liquids, such as sauce, or a coating, this is not taken into account. Preferably hereby, if the food product comprises another meat alternative, this meat alternative is present in a lower weight than the vegetarian food product according to the present invention. The vegetarian food product of the present invention can hereby be used as an alternative to red meat and/or white meat, e.g. beef, pork, mutton, and poultry meat.

In a preferred embodiment, the food product is vegetarian, i.e. does not comprise meat or meat components. The food product may thus preferably be a meatless alternative for:
- finely comminuted meat preparations such as cooked sausage, frankfurter sausages and pâté in which the raw material obtained from the Cichorium based vegetarian food product of the present invention is preferably reduced to an essentially homogeneous mass, whether or not supplemented with visible larger particles;
- fine to coarse ground meat, meat preparations and prepared meat such as minced meat, hamburgers, sausages, bratwurst, nuggets as well as meal components containing such products (e.g., Bolognaise sauce, dumplings, stew, stew sauce).

The vegetarian food product according to the present invention resembles meat to such a high degree with respect to texture, and can thus be mixed in with many types of meat during preparation of a final hybrid food product, including beef, pork, poultry, lamb or mutton, or any other type of consumable meat.

Preferably, texture can be quantified via the parameters of a Texture Profile Analyzer and can be measured, for example, with a TA.XT Texture Analyzer from Stable Micro Systems.

Meat can be sorted in 3 categories: lean meat (max. 20% analytic fat), connective tissue (>20% protein and >70% collagen/protein), fat tissue (>80% analytic fat). Any type of consumable meat can be seen as a combination of these 3 categories.

Connective tissue contributes to the texture of meat preparations, but is also responsible for a number of process complications such as contraction ('shape distortion') when baking burgers, for example, and some connective tissue-rich parts must be converted into a 'collagen emulsion' before they can be further processed. To this end, it undergoes a labor and energy intensive process with combinations of cooking, of swelling by adding acids and neutralizing with bases, comminuting by adding ice, homogenizing, freezing and re-comminuting. Softer connective tissue types can be reduced in size in frozen form or added directly during the assembly of meat products and prepared meat, but the tendon-rich appearance is not only visually disturbing but also annoying during eating. This connective tissue can be partially or completely interchanged by the Cichorium-based vegetarian food product according to the present invention. For instance, 8 wt.% of a rind emulsion in a pâté can be exchanged for the present vegetarian food product without any observable change in texture.

Lean meat which is visible in the final product with a particle size between 1 and 15 mm, typically between 2 and 5 mm, in meat preparations and cooked meat can be replaced with the present vegetarian food product. This can be 1 to 100% replacement, but typically between 30 and 50%, mainly because consumers tend to expect an approximately equal amount of meat and vegetarian product in a hybrid meat product (i.e. 50%-50% mixture).

By way of example, burgers can be made with the vegetarian food product of the present invention, having texture properties comparable to those of an entirely meat-based product, such as
- A hamburger with a 50/50 mixture, comprising 48% meat, 48% vegetarian food product according to the present invention and 4% additives (e.g. salt, spices, antioxidants, starch);
- A hamburger with about a 70/30 ratio with 68% meat, 28% vegetarian food product according to the present invention and 4% additives (e.g. salt, black pepper, starch);
- If a red color is required when fresh, the vegetarian food product of the present invention can be mixed with, for example, beetroot, tomato powder or a hemoglobin-based colorant;
- In the examples above, no flavor-masking additives need to be added i.e. no sugar, vanilla, HVP flavors, yeast extracts, stock or extra spices with a quickly predominant flavor such as onion, paprika or garlic need to be added. This is mainly due to the reduction of the bitterness obtained via the method of the present invention;
- A terrine in which the lean meat is replaced by the vegetarian food product of the present invention, whereby the taste and flavour remain dominated by the meat parts therein; e.g. liver 30%, 25% fat meat, 38% vegetarian food product of the present invention, 7% additives (e.g. herbs, characteristic flavor for the terrine (e.g. Cognac, fried onion), (nitrite curing) salt, sugar, antioxidant);

By retaining an essentially colorless or white appearance, the vegetarian food product of the present invention is extremely suitable as an alternative to lean chicken meat and other white meats. In chicken nuggets, for example, the vegetarian food product of the present invention can be used as an alternative to the chicken skin emulsions and lean meat used in them. Hybrid chicken products produced with the vegetarian food product retain texture properties comparable to those of a fully chicken-based product.

The vegetarian food product of the present invention is also suitable as an alternative raw material in hybrid fish preparations. Hybrid is here understood to mean a combination of fish and vegetable material within one and the same consumable product which is visually indistinguishable from a fish preparation with only fish as the basic raw material and which is or can be processed and consumed in the same way. By retaining an essentially colorless or white appearance, the vegetarian food product of the present invention is extremely suitable as an alternative to fish. In fishsticks for example, the vegetarian food product can be used as an alternative to the skin emulsions and fish muscle tissue used in them. Hybrid fish products produced with the vegetarian food product retain texture properties comparable to those of an all-fish-based product.

Current meat analogs are the result of successively complex processes involving a chain of different technologies spread around the world. They often use agricultural crops that are grown for industrial applications and that cause an intense global flow of goods. Their transformation processes into raw material include chemical extraction techniques, precipitation reactions, re-dissolving, hydrolysis, multi-stage drying processes, mixing techniques in which previously fractionated streams from various crops are recombined, fermentations, extrusion technology and ultimately often precise application instructions with the addition of additives to achieve a desired vegetarian product. Compared to meat preparations and prepared meat, the current vegetarian alternatives therefore have an extensive list of ingredients, and it is nevertheless not clear to the consumer what long way the multitude of raw materials has come and which processes were involved.

In contrast to the above, the vegetarian food product according to the present invention originates from a single type of vegetable crop, grown locally and, in contrast to the industrial raw materials just described, with minimal processing to be used as a raw material in the production of vegetarian alternatives to meat preparations, prepared meat and fish preparations. Furthermore, the vegetarian food product of the present invention can be further processed using the usual installations and methods of the meat and fish processing industry.

The vegetarian food product of the present invention can also be used to prepare vegetarian and hybrid alternatives to meat product wherein the vegetarian food product according to the present invention is the main ingredient and characterized the structure of the food product. Hereby, preferably, the vegetarian food product according to the present invention makes up at least 60%, and preferably at most 85%, of the total mass of the final food product, excluding any coating, and no other visible structural components with a particle size greater than 0.5mm are used. The remaining portion of the final product, i.e. preferably at least 15% and preferably at most 40%, consists of any or any combination of:
- water, oil, protein, whether or not in the form of a separately prepared emulsion,
- binders customary according to the application, e.g. protein, starch and/or vegetable fibers,
- salt, herbs and spices, aroma,
- any other vegetable ingredients

In an exemplary embodiment, the vegetarian food product of the present invention is mixed with other ingredients in the following way: 74wt.% of the vegetarian food product of the present invention, 11wt.% of a binder mass which may for instance consist of protein and a combination of vegetable fibers and corn starch (such as 4wt% protein, 3wt% potato fiber, 4wt% corn starch), 6% of a flavor blend suitable for vegetarian products (e.g. salt, spices such as pepper, nutmeg, garlic, onion, parsley, etc., vegetable stock, smoke flavor). After mixing these ingredients, 5wt% water is added and after absorption briefly mixed in 4% oil. Depending on the taste package, this base is suitable as a vegetarian alternative to bratwurst, nuggets, hamburger or other shaped products. The mix is kept cold for easy moldability, preferably at a temperature of at most 5 ° C, more preferably at most 2 ° C. Shaped products can be briefly fried, preferably for a frying time of between 40 seconds and 1 minute, and preferably at a frying temperature of between 160°C and 180 °C and may be cooked through in a steam oven at 90 °C to a core temperature of about 75 °C.

In an exemplary embodiment, the vegetarian food product of the present invention is combined with a vegetable emulsion. For example, the emulsion can be made in a weight ratio of 1:4:3 of protein:water:oil with soy protein isolate, pea protein, broad bean protein, or combinations thereof. The basic mixture is formed with 71wt% of the vegetarian food product of the present invention, 20wt% of the abovementioned emulsion, 2.5wt% of a vegetarian chicken flavor blend, 0.5wt% salt and 6wt% binder mass as in the previous exemplary embodiment. The further processing is also identical to the previous exemplary embodiment. By altering the ratio of vegetarian food product of the present invention to the emulsion, the degree of fibrousness vs. continuous phase is changed comparable to how in a meat product, the aspect of fine dough vs. coarsely ground meat varies and thereby affects the eating sensation in a similar way. By adding coloring and/or flavoring agents, the vegetarian food product of the present invention can be used as a vegetarian alternative for "pulled" meat in sauce-like preparations, fillings and prepared dishes.

In an exemplary embodiment, the vegetarian food product of the present invention is colored with a combination of beet red powder and caramel in a weight ratio of 5:3 to 7:1 and of which 0.5 - 1wt% with respect to the weight of the portions of the plant, is added depending on the desired color intensity. The coloring is accelerated by introducing the mixture under vacuum. After coloring, 1.2% salt, 0.15% black pepper and 0.15% vegetarian tuna flavor are added. The preparation can be further used as such in vegetarian tuna salads or other prepared dishes in which tuna is processed and can be replaced by the described vegetarian alternative.

In vegetarian products, use can be made of gums such as carrageenan, konjac gum and celluloses modified to improve the warm structure. The Cichorium-based vegetarian food product of the present invention is an alternative to these additives in vegetarian products based on structured vegetable proteins.

In an exemplary embodiment, the vegetarian food product of the present invention can be used to replace a combination of egg protein, hydroxypropyl methyl cellulose and methyl cellulose together with a portion of textured soy protein concentrates in a textured soy protein based product according to: 15wt% soy protein emulsion (e.g. as described above in a weight ratio of 1:4:3 of protein:water:oil), 40wt% hydrated textured soy protein concentrate, 5wt% starch binder, 4wt% flavor mix (different combinations are possible, see exemplary embodiments given above) and 36wt% of the vegetarian food product of the present invention. This makes the product suitable for vegan consumers without the addition of texture modifying additives during heating.

Note that the present meat alternative also:
- increases animal welfare, since parts of meat products from these animals can be interchanged for the vegetarian food product of the present invention, thereby requiring less animals;
- reduces fat intake of human consumers as it can be used to replace fats in food products.

## Claims

1. A method for obtaining a vegetarian food product from portions of a plant of the genus Cichorium, comprising the step of blanching said portions by immersing said portions in water at a blanching temperature of between 40°C and 99°C, for a blanching period of at least 11 minutes, and subsequently reducing the moisture content of the blanched portions to less than 95 weight%, thereby obtaining a fibrous vegetarian food product suitable to be further processed into hybrid or vegetarian meat, fish or poultry products.

2. A method according to claim 1, wherein the moisture content of the blanched portions is reduced to between 40 and 95 weight%.

3. A method according to any of the preceding claims, wherein the blanching period is less than 4 hours, preferably between 1 hour and 4 hours.

4. A method according to any of the preceding claims, wherein the blanched portions are vacuum wrapped.

5. A method according to claim 4, wherein the blanched portions are vacuum cooked by vacuum wrapping the blanched portions and subsequently heating the vacuum wrapped blanched portions, preferably by subjecting the portions to a temperature of between 80°C and 95°C and/or to a core temperature of between 67°C and 95 °C.

6. A method according to any of the preceding claims, wherein the blanched portions are cooled down, preferably to a temperature below 4°C, more preferably wherein the portions are frozen, preferably to a temperature of -18°C or less.

7. A method according to any of the preceding claims, comprising the step of, prior to blanching, reducing the size of a plant of the genus Cichorium, or of a plant part thereof, thereby obtaining said portions.

8. A method according to any of the preceding claims, comprising the step of cleaning said portions prior to blanching.

9. A method according to any of the preceding claims, wherein the moisture content of the blanched portions is reduced by leaking the portions and/or squeezing the portions.

10. A method according to any of the preceding claims, wherein said portions are submersed in water at a weight ratio of between 1:2 and 1:6.

11. A method according to any of the preceding claims, wherein said portions are immersed in a water flow, preferably while said portions are being pressed in opposite direction of the water flow, more preferably whereby said portions are immersed in water using a counterflow screw press.

12. A method according to any of the preceding claims, comprising any or any combination of the following steps:
a) wrapping, preferably vacuum wrapping, and freezing, preferably to a temperature of minus 18°C or lower, of the blanched portions or parts thereof;
b) individually freezing said blanched portions, or of parts thereof, e.g. individual quick freezing (IQF), preferably by separating the portions or parts thereof by shaking and subsequently freezing the portions, preferably to a temperature of -18°C or lower;
c) vacuum wrapping and pasteurizing the blanched portions or parts thereof, at a temperature of between 80°C and 95°C, and/or to a core temperature of 67°C to 95°C, and optionally subsequently cooling the wrapped and pasteurized portions or parts thereof for chilled storage;
d) cooling the blanched portions, or of parts thereof, preferably to a temperature of 4°C or less, such as preferably between -5°C and 4°C; and/or
e) packaging the blanched portions, or of parts thereof, in a retort stable package and sterilizing the blanched portions, or parts thereof, to enable storage at ambient temperature, and/or
f) vacuum wrapping and cooling down the blanched portions, or of parts thereof, preferably to a temperature of 4°C or less, such as preferably between -5°C and 4°C.

13. A food product for human consumption, comprising a vegetarian food product obtained by any of the preceding claims.

14. A system for obtaining a vegetarian food product from portions of a plant of the genus Cichorium, comprising a blanching system, the system being configured to perform a method according to any of the claims 1 to 10, wherein the blanching system comprises a basin for immersing said portions in water, said basin comprising a temperature regulating system configured to keep a temperature of a mixture of plant portions and water to a temperature between 40°C and 99°C for a blanching period of at least 11 minutes.

15. A system according to claim 14, further comprising any or any combination of:
- a vacuum wrapping apparatus for vacuum wrapping blanched portions;
- a counterflow screw press for pressing said portions in a direction opposite of a waterflow during a blanching step, and/or
- a cooking system comprising a temperature-regulated chamber configured for vacuum cooking the blanched portions, the cooking system being configured to subject blanched portions to a temperature of between 80°C and 95°C and/or to a core temperature of between 67°C and 95 °C.
